# EUROPÄISCHE PATENTSCHRIFT

(11) **EP 1 119 468 B1**
(45) Veröffentlichungstag und Bekanntmachung des Hinweises auf die Patenterteilung: **02.01.2003**
(21) Anmeldenummer: 99950682.7
(22) Anmeldetag: 08.10.1999
(51) Int. Cl.: B60M 1/30

(54) **STROMSCHIENE FÜR DIE STROMVERSORGUNG UND DEREN HERSTELLUNGSVERFAHREN**
CONDUCTOR RAIL FOR SUPPLYING POWER AND A PRODUCTION METHOD THEREFOR
BARRE CONDUCTRICE POUR L'ALIMENTATION ELECTRIQUE ET SON PROCEDE DE PRODUCTION

(30) Priorität: 09.10.1998 DE 19846491
(43) Veröffentlichungstag der Anmeldung: 01.08.2001
(73) Patentinhaber: Paul Vahle GmbH & Co. KG, 59172 Kamen (DE)
(72) Erfinder: SCHRÖDER, Arno, D-44579 Castrop-Rauxel (DE); RUNTE, Werner, D-59174 Kamen (DE)
(74) Vertreter: LENZING GERBER
(86) Internationale Anmeldenummer: EP9907575
(87) Internationale Veröffentlichungsnummer: WO00021776

(56) Entgegenhaltungen:
- DE-A- 2 435 641
- DE-A- 2 546 026
- US-A- 3 902 579

## Beschreibung

Die Erfindung betrifft eine Stromschiene gemäß dem Oberbegriff des Anspruch 1.

Stromschienen zur Stromversorgung von verfahrbaren Verbrauchern, die aus zwei verschiedenen Materialien bestehen, sind in zahlreichen Ausführungsformen bekannt. Die Stromschienen bestehen meist aus einem Grundkörper, auf den eine Schleiffläche aus insbesondere verschleißfesterem Metall aufgebracht ist.

Das deutsche Gebrauchsmuster DE-U-7114522 zeigt eine Stromschiene bestehend aus einem Grundkörper aus Metall, welcher einen Kopf ausweist, bei dem die Schleiffläche um den Kopf des Grundkörpers herum gefalzt ist.

Aus der DE-2349127 C2 ist eine Stromschiene für Stromverbraucher mit großem Strombedarf und hohen Fahrgeschwindigkeiten bekannt, bei der die Schleiffläche an der dem Grundkörper zugewandten Seite einen Steg hat, der Hinterschneidungen aufweist. Die Schleiffläche wird von der schmalen Stirnfläche des Grundkörpers aus mit ihrem Steg in eine entsprechend des Steges ausgeformte Ausnehmung des Grundkörpers hineingeschoben. Anschließend werden die Außenschenkel der Schleiffläche mittels auf sie einwirkender Rollen gegen die korrespondierenden Flanken des Grundkörpers abgewinkelt. Gleichzeitig werden die Wandungen der Aufnehmung des Grundkörpers gegen den Steg gepreßt, so daß eine dauerhafte Verbindung zwischen Schleiffläche und Grundkörper entsteht.

Aus dem deutschen Patent DE-C-2244492 ist ebenfalls eine Stromschiene für die Stromversorgung von beweglichen Stromverbrauchern mit großem Stromverbrauch und hohen Fahrgeschwindigkeiten bekannt, bei der auf dem Grundkörper eine Gleitschiene aus einem insbesondere verschleißfesterem Metall angeordnet ist. Der Grundkörper weist auf der der Gleitschiene zugewandten Fläche eine Mehrzahl von sich über die Länge des Grundkörpers erstreckenden schwalbenschwanzförmigen Vorsprüngen auf, die von U-profilförmigen Ausnehmungen in der Auflagefläche der Gleitschiene übergriffen werden, deren Flanken gegen die korrespondierenden Flanken der Vorsprünge auf dem Grundkörper zur Anlage gebracht sind. Beim Fügeprozeß werden mittels Rollen, welche einerseits die zur Stromabnahme dienende Schleiffläche und die mit der Gleitschiene zu verbindende Seitenwandung des Grundkörpers gegeneinander druckbeaufschlagen, wodurch die Wandungen der in den U-profilförmigen Ausnehmungen einliegenden Stege der Gleitschiene gegen die korrespondierenden Flanken der schwalbenschwanzförmigen Vorsprünge angedrückt werden. Gleichzeitig werden die Außenschenkel der Gleitschiene in an sich bekannter Weise vorzugsweise mittels auf sie einwirkender Rollen gegen die korrespondierenden Flanken des Grundkörpers abgewinkelt.

Nachteilig bei den vorgenannten Stromschienen ist, daß das Schleifleitungsmaterial, welches stets härter als das Material des Grundkörpers ist, verformt wird, wodurch keine optimale Anpassung zwischen dem weicheren Grundkörpermaterial und dem Schleifleitungsmaterial beim Walzumformen erzielt werden kann. Bedingt dadurch, daß das Schleifleitungsmaterial insbesondere an den Außenflächen nicht optimal an dem Grundkörpermaterial anliegt, kann Feuchtigkeit zwischen die beiden Teile eindringen, und es nachteilig zu einer Korrosionsbildung zwischen den beiden Teilen kommen.

Es ist Aufgabe der vorliegenden Erfindung, eine Stromschiene mit einer verschleißfesteren Schleiffläche, die mechanisch auf dem weicheren Grundkörper aufgebracht ist, bereitzustellen, bei der sich zwischen dem Grundkörper und der Schleiffläche keine Korrosion bilden kann.

Diese Aufgabe wird durch eine Stromschiene mit den Merkmalen des Anspruchs 1 gelöst. Die erfindungsgemäße Stromschiene zeichnet sich dadurch aus, daß im wesentlichen das weichere Material des Grundkörpers verformt und somit eine bessere Verbindung zwischen Grundkörper und Schleiffläche erzielt wird. Der Korrosionsbildung, welche bei Stromschienen gemäß des Standes der Technik dadurch entstehen konnte, daß stets Feuchtigkeit von außen zwischen den Grundkörper und das Schleifflächenprofil seitlich in die Stromschiene eindringen konnte, wird dadurch begegnet, daß das weichere Material des Grundkörpers, welches insbesondere Aluminium ist, im Querschnitt an die Außenflächen bzw. Außenkanten des härteren Schleifflächenprofils fest angewalzt wird. Wurde bei den bekannten Stromschienen stets der Grundkörper von dem härteren Schleifflächenmaterial seitlich umgriffen, so wird bei der erfindungsgemäßen Lösung vorteilhaft das weichere Material des Grundkörpers an das härtere Material der Schleiffläche angepreßt.

Um eine optimale Befestigung zwischen den als Profilkörpern ausgebildeten Grundkörper und Schleiffläche zu erzielen, sind entlang der Stromschiene am Schleifflächenprofil Stege angeformt, welche insbesondere mit Hinterschnitten versehen sind. Beim Fügeprozeß wird das weichere Material des Grundkörpers hinter die Hinterschnitte der Stege gepreßt, wodurch eine dauerhafte Verbindung zwischen Grundkörper und Schleiffläche erzielt wird.

Eine vorteilhafte Verbindung zwischen dem Grundkörper und der Schleiffläche ergibt sich insbesondere, wenn der Grundkörper aus Aluminium und die Schleiffläche aus Edelstahl oder Kupfer ist.

Die Umformung des Aluminiumgrundkörpers vollzieht sich vorteilhaft noch in dem Bereich, in dem zwar eine geringe Kaltverfestigung, aber noch keine Versprödung des Aluminiums auftritt.

In einer möglichen Ausführungsform haben sämtliche Stege lediglich an einer Seite Hinterschnitte. An der den Hinterschnitten gegenüberliegenden Seite der Stege befinden sich leicht konische Flächen mit einem Neigewinkel von ca. zwei Grad. An der dem Schleifflächenprofil zugewandten Seite des Grundkörpers sind eine Anzahl von Ausnehmungen vorgesehen, in die die Stege vor dem Umformprozeß hineingreifen. Die Ausnehmungen sind leicht konisch gestaltet, wobei der Öffnungsquerschnitt größer als der Bodenquerschnitt ist. Der Öffnungswinkel der konisch angeordneten Seitenwände beträgt ebenfalls ca. zwei Grad.

Die Innenflächen der länglichen Ausnehmung weisen vorteilhaft in einer besonderen Ausführungsform Längsriffelungen auf. Sofern ein Aluminiumprofil als Grundkörper verwendet wird, bildet sich stets eine mikrometer dünne Oxidationsschicht. Durch die Riffelung wird diese Oxidationsschicht während des Fügeprozeßes aufgerissen, wodurch ein sehr guter elektrischer Kontakt zwischen dem Grundkörper und der Schleiffläche entsteht. Ferner ist es vorteilhaft, wenn die Stege größere Rauhtiefen als die Schleiffläche selbst haben, wodurch eine sehr gute Haftung zwischen dem Grundkörper und dem Schleifflächenmaterial erreicht wird.

Für den Fügeprozeß drückt eine Walze das Schleifflächenprofil gegen den Grundkörper. Eine profilierte Rolle drückt gleichzeitig den Grundkörper gegen das Schleifflächenprofil. Hierdurch werden die Stege in die Ausnehmungen gedrückt, wodurch die konischen Flächen der Ausnehmungen und der Stege gegeneinander druckbeaufschlagt werden. Durch den Anpressdruck verformt sich die Riffelung und paßt sich der Kontur des Profils der Stege an. Dabei reißt die Oxidationshaut des Alumimiumprofils im Bereich der Riffelung auf. Eine erneute Spontanoxidation, die in wenigen Minuten ablaufen würde, ist durch die gute Anpassung zwischen dem Grundkörper und der Schleiffläche ausgeschlossen.

Damit das Material des Grundkörpers hinter die Hinterschneidungen der Stege des Schleifflächenprofils hineingepreßt wird, wird eine stark profilierte Walze verwendet, die an der dem Schleifflächenprofil abgewandten Seite des Grundkörpers zur Anlage gebracht wird.

Mittels weiterer Rollen, die einen seitlichen Anpreßdruck gegen das Material des Grundkörpers erzeugen, wird das Material in die nach außen weisenden Rücksprünge, welche durch die Hinterschneidungen der äußeren Stege und die langen Schmalseiten der Schleiffläche gebildet sind, hineingedrückt. Hierdurch entsteht ein glatter Übergang zwischen den Materialien des Grundkörpers und der Schleiffläche, die Eindringen von Feuchtigkeit zwischen die beiden Teile verhindert.

Um unnötige Toleranzaddierung zu vermeiden, sollten vorteilhaft die profilierten Teile Grundkörper und Schleiffläche während ihres Strangpress-Fertigungsverfahrens mit eingewalzten Rillen zur einheitlichen Seitenzuordnung versehen werden.

Da es auch bei der erfindungsgemäßen Stromschiene möglich ist, daß an dem Stromschienenende Feuchtigkeit zwischen die Schleiffläche und den Grundkörper eindringen kann, wird in einer besonderen Ausführungsform eine Kontaktmasse zum Korrosionsschutz zwischen dem Grundkörper- und dem Schleifflächenprofil vor dem Fügeprozeß gebracht, welche sich beim Fügeprozeß gleichmäßig und über die gesamte Kontaktfläche verteilt.

Nachfolgend wird ein mögliches Ausführungsbeispiel einer erfindungsgemäßen Stromschiene und deren Herstellungsverfahren anhand von Zeichnungen näher erläutert.

Es zeigen:
- Figur 1:: Eine Querschnittsdarstellung der zusammmenzufügenden Profilteile Grundkörper und Schleiffläche;
- Figur 2:: den Fertigungsschritt, bei dem das Material des Grundkörpers mittels einer Walze oder Andruckrolle hinter die Hinterschneidungen der Stege des Schleifflächenprofils gedrückt wird;
- Figur 3:: eine Querschnittsdarstellung einer zusammengefügten erfindungsgemäße Stromschiene.

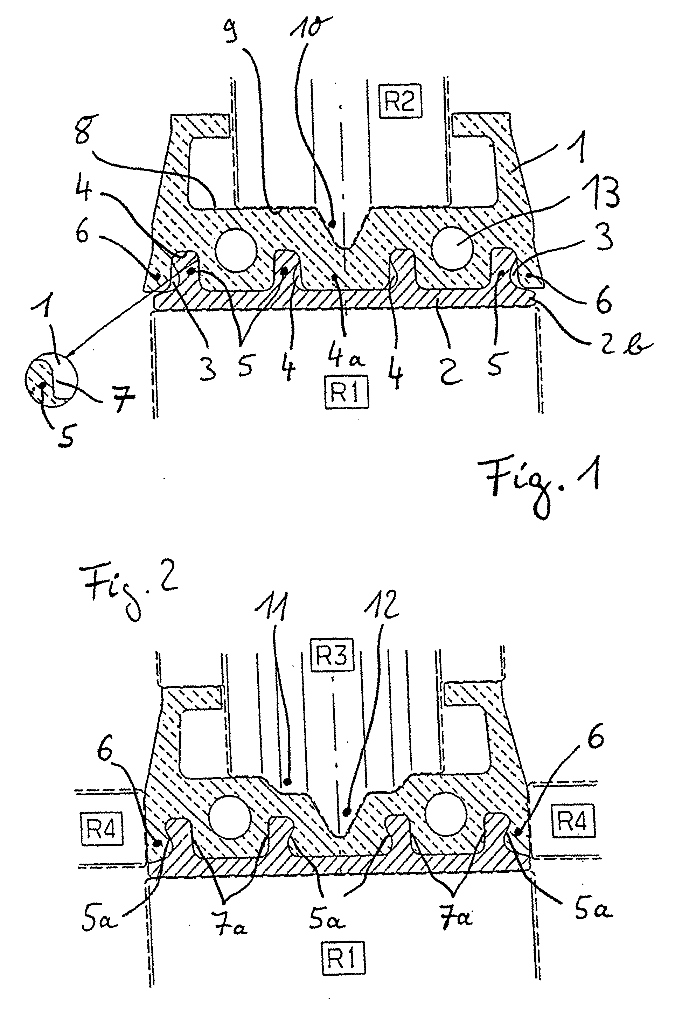

Die Figur 1 zeigt die beiden Strangpreßprofile 1 und 2, welche mittels der Rollen R1 und R2 gegeneinander druckbeauschlagt werden.

Der Grundkörper 1 weist vier sich in Längsrichtung der Stromschiene erstreckende Ausnehmungen 4 auf, in die die Stege 5 des Schleifflächenprofils 2 einliegen. Die Ausnehmungen 4 haben konisch geformte Flanken, so daß der Öffnungsquerschnitt der Öffnungen größer ist als die Querschnittsfläche der Bodenfläche der Ausnehmungen 4. Dies dient der leichteren Vormontage von Grundkörper 1 und Schleifflächenprofil 2. Die Stege 5 weisen jeweils an einer Seite Hinterschneidungen 5a auf.

Durch die Rollen R1, R2 und R3 wird das Material des Grundkörpers 1 zusammengedrückt und drückt sich hinter den Hinterschneidungen 5a der Stege 5 gegen die Stegflanken an.

Die Oberfläche des Grundkörperprofils 1, welche mit den Stegen 5 beim Fügeprozeß in Kontakt kommt weist teilweise Längsriffelungen 7 auf, welche durch den Fügeprozeß ebenfalls verformt werden. Durch die Verformung der Riffelungen reißt die Oxydschicht in diesem Bereich auf und es kommt zur Anlage von nicht oxidierendem Grundkörpermaterial 7a mit dem Material des Schleifflächenprofils 2.

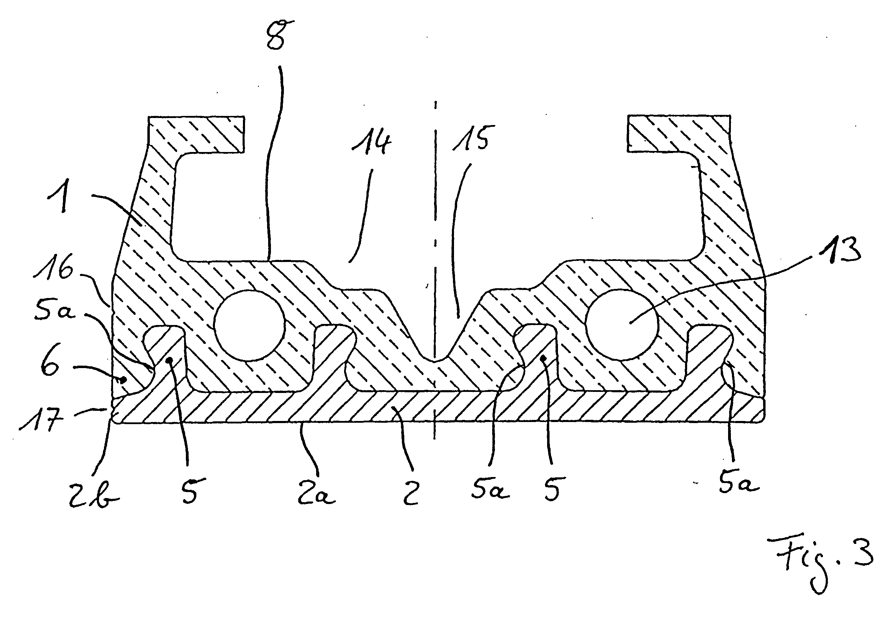

Zum Anpressen des Grundkörpers 1 an das Schleifflächenprofil 2 weist die Walze bzw. Rolle R2 eine flache Auflagefläche 9 auf, welche sich gegen die der Schleiffläche 2 abgewandten Seite 8 des Grundkörpers 1 abstützt. Die Walze bzw. Rolle R2 ist profiliert ausgestaltet und weist in einer einfachen Ausführungsform einen umlaufenden nasenförmigen Vorsprung 10 auf, welcher das Material des Grundkörper 1 zusammendrückt, derart, daß sich das Material im Bereich der Riffelungen 7 verformt. Mittels einer zweiten Rolle R3, wie in Figur 2 dargestellt, welche stärker als die Rolle R2 profiliert ist, wird das Material des Grundkörpers 1 hinter die Hinterschneidungen 5a der Stege 5 gedrückt. Gleichzeitig werden die Außenschenkel 6 mittels seitlicher Anpreßrollen bzw. -walzen R4 in die Rücksprünge 3 gedrückt, so daß ein glatter Übergang zwischen dem Grundkörper 1 und der langen Schmalseiten 2b des Schleifflächenprofils 2 entsteht.

Die sich in Längsrichtung erstreckenden Hohlräume 13 dienen zur Materialeinsparung und gleichzeitiger Oberflächenvergrößerung des Grundkörpers 1. Sie können eine beliebige Querschnittsform aufweisen, eine Heizung, von den Stromschienenenden aus in die Hohlräume 13 eingeführt aufnehmen.

Wie aus Figur 3 ersichtlich verbleiben die V-förmigen Vertiefungen 14, 15 nach dem Fügeprozeß auf der der Schleiffläche abgewandten Seite 8 des Grundkörpers 1.

Die Längskerben 16, 17, welche im Grundkörperprofil 1 und in dem Schleifflächenprofil 2 während des Strangpreßverfahrens mit hergestellt wurden, dienen der leichteren Zuordnung bei der Vormontage von Grundkörper 1 und Schleiffläche 2, so daß unnötige Toleranzaddierung durch falsche Vormontage vermieden werden.

Darüber hinaus dienen die Längskerben 16 und 17 der fertigen Stromschiene der eindeutigen Seitenzuordnung während der Stromschienenmontage.

## Patentansprüche

1. Stromschiene für die Stromversorgung von Stromverbrauchern, bestehend aus einem Grundkörper (1) und einer mit dem Grundkörper (1) verbundenen Schleiffläche (2a) aus einem insbesondere verschleißfesteren Werkstoff, wobei an der zum Grundkörper (1) weisenden Seite des die Schleiffläche (2a) bildenden Teils sich über die Länge der Schleiffläche (2) erstreckende Stege (5) vorgesehen sind, **dadurch gekennzeichnet, daß** jeweils ein Steg (5) zusammen mit einer langen Schmalseite (2b) des Schleifflächenteils (2) einen Rücksprung (3) bildet, der von dem Material (6) des Grundkörpers (1) zumindest teilweise ausgefüllt ist.

2. Stromschiene nach Anspruch 1, **dadurch gekennzeichnet, daß** der Grundkörper (1) eine der Anzahl der Stege (5) entsprechende Anzahl von Ausnehmungen (4) hat, in die die Stege (5) zur Einlage gebracht sind, und die Wandungen der Ausnehmungen (4) durch mindestens einen Umformfügeprozeß an die Oberflächen der korrespondierenden Stege (5) angepreßt sind.

3. Stromschiene nach Anspruch 1 oder 2, **dadurch gekennzeichnet, daß** zumindest einer der Stege (5) eine Hinterschneidung (5a) hat, und die jeweils mit dem Steg (5) zur Anlage gebrachte Ausnehmung (4) dessen Hinterschneidung (5a) nach dem Fügeprozeß hintergreift.

4. Stromschiene nach einem der Ansprüche 1 bis 3, **dadurch gekennzeichnet, daß** die Oberfläche des Grundkörpers (1) zumindest abschnittsweise in den Bereichen eine Riffelung (7) hat, die während des Fügeprozesses an die Oberfläche der Stege (5) des Schleifflächenteils (2) angedrückt werden.

5. Stromschiene nach Anspruch 4, **dadurch gekennzeichnet, daß** der Grundkörper (1) aus Aluminium ist, wobei sich vor dem Fügeprozeß eine Oxydationsschicht auf der Oberfläche des Grundkörpers (1) gebildet hat und die Riffelung (7) derart ausgestaltet ist, daß beim Fügeprozeß deren Oxydationsschicht aufreißt.

6. Stromschiene nach einem der vorherigen Ansprüche, **dadurch gekennzeichnet, daß** die Ausnehmungen (4) im Grundkörper (1) vor dem Fügeprozeß im wesentlichen U-profilförmig sind.

7. Stromschiene nach einem der vorherigen Ansprüche, **dadurch gekennzeichnet, daß** der Grundkörper (1) mindestens einen sich längs des Grundkörpers (1) erstreckenden Hohlraum (13) hat, der zur Oberflächenvergrößerung des Grundkörpers (1) dient.

8. Stromschiene nach einem der vorherigen Ansprüche, **dadurch gekennzeichnet, daß** der Grundkörper (1) mindestens einen sich längs des Grundkörpers (1) erstreckenden Kanal (13) hat, in dem zumindest abschnittsweise eine Heizung ist oder durch den ein Heiz- und/oder Kühlmittel fließt.

9. Stromschiene nach dem Oberbegriff des Anspruch 1 oder nach einem der vorherigen Ansprüche, **dadurch gekennzeichnet, daß** der Grundkörper (1) ein Strangpreßprofil aus Aluminium und das Schleifflächenteil (2) ein Strangpreßprofil aus Edelstahl ist.

10. Verfahren zur Herstellung einer Stromschiene nach den Ansprüchen 1 bis 9, **dadurch gekennzeichnet, daß**
- in einem ersten Prozeßschritt das Schleifflächenteil (2) mit seinen Stegen (5) in die dafür vorgesehenen Ausnehmungen (4) eingelegt wird, und daß
- in einem zweiten Prozeßschritt mittels Walzen der Grundkörper (1) und das Schleifflächenteil (2) gegeneinander druckbeaufschlagt werden, derart, daß eine erste Walze (R1) gegen die zur Stromabnahme dienende Fläche (2a) drückt, und eine den Grundkörper (1) von der der Schleiffläche (2) abgewandten Seite (8) gegen das Schleifflächenteil (2) druckbeaufschlagende zweite Walze (R3) profiliert ist, derart, daß mindestens eine von der Walzfläche (9) vorstehende umlaufende Nase (10,11,12) das Material des Grundkörpers (1) hinter mindestens eine Hinterschneidung (5a) eines Steges (5) des Schleifflächenteils (2) preßt, und daß
- zeitgleich zum oder nach dem zweiten Prozeßschritt Walzen (R4) das Material (6) des Grundkörpers (1) seitlich von außen druckbeaufschlagen und dieses hinter Hinterschneidungen (5a) der die Rücksprünge (3) bildenden Stege (5) des Schleifflächenteils (2) pressen.

11. Verfahren zur Herstellung einer Stromschiene nach Anspruch 10, **dadurch gekennzeichnet, daß** in der der Schleiffläche (2) abgewandten Seite (8) des Grundkörpers (1) eine V-förmige Rille zur Zentrierung einer profilierten Walze (R2) ist, und daß vor dem zweiten Prozeßschritt die Walze (R2) mit ihrer Druckfläche (9) den Grundkörper (1) und das Schleifflächenprofil (2) zusammenpreßt.

12. Verfahren zur Herstellung einer Stromschiene nach Anspruchen 11, **dadurch gekennzeichnet, daß** bei Verwendung eines Grundkörpers (1) aus Aluminium, bei dem bestimmte Oberflächenbereiche, welche in Kontakt mit den Stegen (5) der Schleiffläche (2) kommen, eine Riffelung (7) aufweisen, zumindest die Oxydschicht im Bereich der Riffelungen (7) beim Erzeugen der V-förmigen Rille durch die profilierte Walze (R2) aufgerissen wird.

## Claims

1. Busbar for supplying current to current-consuming loads, comprising a main body (1) and a grinding surface (2a) of, in particular, more wear-resistant material, which is connected to the main body (1), wherein ridges (5) extending along the length of the grinding surface (2) are provided on that side of the part forming the grinding surface (2a) which faces towards the main body (1), **characterised in that** in each case a ridge (5), together with a long narrow side (2b) of the part (2) having the grinding surface, forms a return (3) which is at least partly filled by the material (6) of the main body (1) .

2. Busbar according to claim 1, **characterised in that** the main body (1) has a number of recesses (4) corresponding to the number of ridges (5), in which the ridges (5) are inserted, and the walls of the recesses (4) are pressed against the surfaces of the corresponding ridges (5) by at least one forming and joining process.

3. Busbar according to claim 1 or 2, **characterised in that** at least one of the ridges (5) has an undercut (5a), and the recess (4) which is brought to bear against the ridge (5) in the given case fits behind the undercut (5a) in the ridge (5) after the joining process.

4. Busbar according to one of claims 1 to 3, **characterised in that** the surface of the main body (1) has a corrugation (7) in at least sections of those areas which, during the joining process, are pressed against the surfaces of the ridges (5) on the part (2) having the grinding surface.

5. Busbar according to claim 4, **characterised in that** the main body (1) is of aluminium, a layer of oxidation having formed on the surface of the main body (1) prior to the joining process and the corrugation (7) being so arranged that it breaks open the layer of oxidation on the surface in the course of the joining process.

6. Busbar according to one of the foregoing claims, **characterised in that** the recesses (4) in the main body (1) are substantially U-shaped in profile prior to the joining process.

7. Busbar according to one of the foregoing claims, **characterised in that** the main body (1) has at least one cavity (13) extending along the main body (1) which serves to increase the surface area of the main body (1).

8. Busbar according to one of the foregoing claims, **characterised in that** main body (1) has at least one passage (13) extending along the main body (1), in at least sections of which there is a heating system or through which a heating and/or cooling medium flows.

9. Busbar according to the preamble of claim 1 or to one of the foregoing claims, **characterised in that** the main body (1) is an extruded section of aluminium and the part (2) having the grinding surface is an extruded section of stainless steel.

10. Method of producing a busbar according to claims 1 to 9, **characterised in that**
in a first process step the ridges (5) on the part (2) having the grinding surface are inserted in the recesses (4) intended for them, and **in that**
in a second process step pressure is applied by means of rollers to move the main body (1) and the part (2) having the grinding surface towards one another, such that a first roller (R1) presses against the face (2a) serving for current collection, and a second roller (R3), which applies pressure to the part (2) having the grinding surface from the side (8) of the main body (1) remote from the grinding surface (2), is profiled in such a way that at least one circumferentially extending nose (10, 11, 12) which projects from the roller surface (9) presses the material of the main body (1) behind at least one undercut (5a) in a ridge (5) on the part (2) having the grinding surface, and **in that**
at the same time as or after the second process step, rollers (R4) apply pressure laterally to the material (6) of the main body (1) from outside and press it behind undercuts (5a) in the ridges (5) on the part (2) having the grinding surface, which ridges (5) form the returns (3).

11. Method of producing a busbar according to claim 10, **characterised in that** there is, in the side (8) of the main body (1) remote from the grinding surface (2), a V-shaped groove to locate a profiled roller (R2) and **in that**, with its compressing face (9), the roller (R2) presses the main body (1) and the profile (2) having the grinding surface together before the second process step.

12. Method of producing a busbar according to claim 11, **characterised in that,** when a main body (1) of aluminium is used in which certain areas of the surface which come into contact with the ridges (5) on the grinding surface (2) have a corrugation (7), at least the oxide film in the region of the corrugations (7) is broken open by the profiled roller (R2) when the V-shaped groove is produced.

## Revendications

1. Rail de courant pour l'alimentation en courant d'appareils de consommation de courant, se composant d'un élément de base (1) et d'une surface de glissement (2a) reliée à l'élément de base (1) en un matériau résistant en particulier à l'usure, dans lequel, sur le côté tourné vers l'élément de base (1) de la partie formant la surface de glissement (2a), sont prévues des nervures (5) s'étendant sur toute la longueur de la surface de glissement (2), **caractérisé en ce que** chaque nervure (5) forme conjointement avec un petit côté allongé (2b) de la partie de surface de glissement (2) un retrait (3), qui est rempli au moins partiellement par le matériau (6) de l'élément de base (1).

2. Rail de courant selon la revendication 1, **caractérisé en ce que** l'élément de base (1) présente un nombre d'évidements (4) correspondant au nombre des nervures (5), dans lesquels sont disposées les nervures (5) en tant que garniture, et les parois des évidements (4) sont appliquées par pression par au moins un processus de liaison par formage sur les surfaces des nervures correspondantes (5).

3. Rail de courant selon la revendication 1 ou 2, **caractérisé en ce qu'**au moins une des nervures (5) présente une contre-dépouille (5a), et l'évidement (4) disposé adjacent à la nervure (5) saisit la contre-dépouille de celui-ci (5a) après le processus d'assemblage.

4. Rail de courant selon une des revendications 1 à 3, **caractérisé en ce que** la surface de l'élément de base (1) présente au moins partiellement un cannelage (7) dans les zones qui sont comprimées durant le processus d'assemblage sur la surface des nervures (5) de la partie de surface de glissement (2).

5. Rail de courant selon la revendication 4, **caractérisé en ce que** l'élément de base (1) est en aluminium, avant le processus d'assemblage une couche d'oxydation étant formée sur la surface de l'élément de base (1) et le cannelage (7) étant réalisé de sorte que sa couche d'oxydation se fissure durant le processus d'assemblage.

6. Rail de courant selon l'une des revendications précédentes, **caractérisé en ce que** les évidements (4) dans l'élément de base (1) sont sensiblement en forme de U avant le processus d'assemblage.

7. Rail de courant selon une des revendications précédentes, **caractérisé en ce que** l'élément de base (1) possède au moins une cavité (13) s'étendant le long de l'élément de base (1) qui sert à l'agrandissement de la surface de l'élément de base (1).

8. Rail de courant selon une des revendications précédentes, **caractérisé en ce que** l'élément de base (1) présente au moins un canal (13) s'étendant le long de l'élément de base (1), dans lequel se trouve au moins de façon segmentée un chauffage ou à travers lequel circule un fluide de chauffage et/ou de refroidissement.

9. Rail de courant selon le préambule de la revendication 1 ou selon une des revendications précédentes, **caractérisé en ce que** l'élément de base (1) est un profilé extrudé en aluminium et la surface de glissement (2) est un profilé extrudé en acier fin.

10. Procédé de fabrication d'un rail de courant selon les revendications 1 à 9, **caractérisé en ce que**
- au cours d'une première étape de procédé la partie de surface de glissement (2) est garnie avec ses nervures (5) dans les évidements (4) prévus à cet effet, et **en ce que**
- au cours d'une seconde étape de procédé, à l'aide de cylindres, l'élément de base (1) et la partie de surface de glissement (2) sont comprimés l'un contre l'autre, de telle sorte qu'un premier cylindre (R1) exerce une pression contre la surface (2a) servant à l'évacuation du courant et un second cylindre (R3) exerçant une pression depuis le côté (8) éloigné de la surface de glissement (2) contre la surface de glissement (2) est profilé de telle sorte qu'au moins un bec circulaire (10, 11, 12) faisant saillie de la surface de cylindre (9) comprime le matériau de l'élément de base (1) derrière au moins une contre-dépouille (5a) d'une nervure (5) de la surface de glissement (2) et de telle sorte que
- simultanément au cours ou après la seconde étape de procédé des cylindres (R4) exercent une pression sur le matériau (6) de l'élément de base (1) latéralement depuis l'extérieur et compriment celui-ci derrière des contre-dépouilles (5a) des nervures (5) formant les retraits (3) de la surface de glissement (2).

11. Procédé de fabrication d'un rail de courant selon la revendication 10, **caractérisé en ce que** dans le côté (8) éloigné de la surface de glissement (2) de l'élément de base (1) est prévue une gorge en forme de V en vue du centrage d'un cylindre profilé (R2), et **en ce qu'**avant la seconde étape de procédé, le cylindre (R2) comprime avec sa surface de pression (9) l'élément de base (1) et le profilé de surface de glissement (2).

12. Procédé de fabrication d'un rail de courant selon la revendication 11, **caractérisé en ce que** lors de l'utilisation d'un élément de base (1) en aluminium, dans lequel des zones superficielles déterminées, qui viennent en contact des nervures (() de la surface de glissement (2), présentent un cannelage (7), au moins la couche d'oxyde est fissurée à proximité des cannelures (7) lors de la génération de la gorge en forme de V par le cylindre profilé (R2) .
